# EUROPÄISCHE PATENTANMELDUNG

(11) **EP 4 807 645 A1**
(43) Veröffentlichungstag der Anmeldung: **16.09.2026**
(21) Anmeldenummer: 26157796.9
(22) Anmeldetag: 11.02.2026
(51) Int. Cl.: G06Q 10/087, G06Q 50/04, G05B 19/418

(54) **PRODUKTIONSSYSTEM SOWIE VERFAHREN ZUM STEUERN EINES PRODUKTIONSSYSTEMS**

(30) Priorität: 11.03.2025 DE 102025109124
(71) Anmelder: MULTIVAC Sepp Haggenmüller SE & Co. KG, 87787 Wolfertschwenden (DE)
(72) Erfinder: LINSE, Steffen, 87700 Memmingen (DE); REIßLE, Stefanie, 88459 Tannheim-Arlach (DE); ROTTER, Dominik, 87452 Kimratshofen (DE); PAPENBERG, Simon, 87730 Bad Grönenbach (DE)
(74) Vertreter: Grünecker Patent- und Rechtsanwälte PartG mbB

(57) **Zusammenfassung**

Die Erfindung betrifft ein Produktionssystem (1), umfassend mindestens eine Lebensmittelverarbeitungsmaschine (2) sowie einen Auftragsplaner (5) für die Lebensmittelverarbeitungsmaschine (2), wobei der Auftragsplaner (5) als eine cloudbasierte Anwendungssoftware (6) vorliegt, die zum Anlegen eines primären Fertigungsauftrags (8) für ein bestimmtes Produkt (P) in einer bestimmten Menge (M) sowie zum Übermitteln des angelegten, primären Fertigungsauftrags (8) an die Lebensmittelverarbeitungsmaschine (2) konfiguriert ist.

## Beschreibung

Die vorliegende Erfindung bezieht sich auf ein Produktionssystem gemäß Anspruch 1. Weiter betrifft die Erfindung ein Verfahren zum Steuern eines Produktionssystems gemäß dem Anspruch 15.

In Produktionswerken, in welchen Lebensmittelverarbeitungsmaschinen zum Einsatz kommen, wird die Auftragsplanung immer noch häufig von einzelnen, dafür ausgebildeten Personen durchgeführt. Diese orientieren sich an von ihnen entworfenen Excel-Tabellen, um die Auftragsplanung zu visualisieren. Diese Excel-Tabellen werden dann auch als Kommunikationsmittel mit anderen Personen im Lager- und Produktionsbereich genutzt, um die Auftragsplanung an die Produktionsmitarbeiter weiterzugeben bzw. um sie mit den Maschinenbedienern abzustimmen. Dieser papierbasierte Prozess ist unübersichtlich und hängt vor allen Dingen stark von den jeweiligen am Abstimmungsprozess teilnehmenden Personen ab. Außerdem ist diese Art der Auftragsplanung im Vergleich zu digitalen Prozessen nicht nur sehr langsam, sondern auch sehr fehleranfällig, vor allem dann, wenn routinemäßiges Vorgehen unterbrochen wird, beispielsweise durch wechselndes Personal oder krankheitsbedingte Ausfälle. Außerdem ergibt sich ein erhöhtes Fehlerpotenzial dadurch, dass die tabellarisch zunächst auf Papier ausgearbeiteten Fertigungsaufträge noch manuell in die Steuerung der für den Fertigungsauftrag benötigten Maschine bzw. Maschinen übertragen werden müssen, um einen konkreten Produktionsauftrag an der Maschine anzulegen. Passieren dabei Fehler bei der manuellen Eingabe der Produktionsaufträge, beispielsweise, weil prozesskritische Informationen, wie z.B. einzustellende Artikelparameter, Mindesthaltbarkeitsdaten, Chargennummern und/oder Verbrauchsmaterialien falsch eingegeben werden, führt dies zu Störungen im Produktionsbetrieb, insbesondere zu Maschinenstillstandzeiten. Vor diesem Hintergrund ist es für Produktionswerke eine große Herausforderung, fachmännisch generierte Fertigungsaufträge fehlerfrei an die Maschinen zu kommunizieren.

Die DE 10 2023 113 708 B3 offenbart eine Produktionslinie, die als Verpackungslinie oder als Teigverarbeitungslinie vorliegt. Die Produktionslinie umfasst eine Vielzahl von in Produktionsrichtung hintereinander angeordneten Linienmodulen sowie eine damit funktional verbundene Liniensteuerung, mittels welcher die Vielzahl von Linienmodulen ansteuerbar sind, wobei die Liniensteuerung eine Produktmengenvorgabefunktion zum Einstellen einer anhand eines bestimmten Linienmoduls herzustellenden und/oder einer anhand eines bestimmten Linienmoduls zu verarbeitenden Sollproduktionsmenge aufweist, von welcher ein Betrieb der kompletten Produktionslinie abhängig ist. Die Direkteingabe der Sollmengenproduktion erleichtert das Steuern der Produktionslinie durch einen Bediener.

Aufgabe der Erfindung ist es, ein Produktionssystem sowie ein Verfahren zum Steuern eines Produktionssystems mit reduzierter Fehleranfälligkeit zur Verfügung zu stellen.

Diese Aufgabe wird gelöst anhand eines Produktionssystems gemäß Anspruch 1. Weiter wird die Aufgabe gelöst durch ein Verfahren zum Steuern eines Produktionssystems gemäß Anspruch 15.

Vorteilhafte Weiterbildungen der Erfindung sind durch die jeweiligen Gegenstände der abhängigen Ansprüche gegeben.

Das erfindungsgemäße Produktionssystem umfasst mindestens eine Lebensmittelverarbeitungsmaschine sowie einen Auftragsplaner für die Lebensmittelverarbeitungsmaschine. Die Erfindung sieht vor, dass der Auftragsplaner als eine cloudbasierte Anwendungssoftware vorliegt, die zum Anlegen eines primären Fertigungsauftrags für ein bestimmtes Produkt in einer bestimmten Menge sowie zum Übermitteln des angelegten, primären Fertigungsauftrags an die Lebensmittelverarbeitungsmaschine konfiguriert ist. Der erfindungsgemäße Auftragsplaner bietet den Vorteil, dass sich damit online Fertigungsaufträge für die Lebensmittelverarbeitungsmaschine anlegen lassen und diese direkt an die Lebensmittelverarbeitungsmaschine übermittelbar sind. Die Erstellung eines Fertigungsauftrags hängt somit nicht mehr von einer von Person zu Person abgestimmten Auftragsplanung ab, da der Auftragsplaner die von ihm geplanten Aufträge nicht im Bereich der Produktion mit dem Bediener der Maschine absprechen muss. Vielmehr lässt sich die Auftragsplanung abseits der Produktion, an einem ruhigen Ort über die cloudbasierte Software durchführen.

Das Verlagern der erfindungsgemäßen Auftragsplanungssoftware in die Cloud bietet den Vorteil, dass sich die Software standortunabhängig vom Auftragsplaner nutzen lässt, indem er von überall über das Internet mit verschiedenen Geräten, z.B. Computer, Tablet und/oder Smartphone, Fertigungsaufträge anlegen und auf die Lebensmittelverarbeitungsmaschine übertragen kann. Der erfindungsgemäße cloudbasierte Auftragsplaner kommt damit insbesondere auch als Auftragsplaner für verschiedene Maschinen, verschiedene Produktionslinien sowie für verschiedenen Produktionsstandorte infrage. Als cloudbasierte Anwendung bietet der erfindungsgemäße Auftragsplaner auch den Vorteil, dass er sich grundsätzlich einfach durch Updates aktualisieren lässt, wovon ein großes Publikum, d.h. viele Kunden, gleichzeitig profitieren können.

Hinzu kommt, dass sich cloudbasierte Ressourcen, beispielsweise Rechenleistung und/oder Speicherkapazität, je nach Bedarf flexibel anpassen lassen. Der cloudbasierte Auftragsplaner kann damit an das jeweilige Produktionssystem leicht angepasst werden. Bei wachsenden Produktionssystemen kann eine Skalierung des cloudbasierten Auftragsplaners problemlos geschehen.

Der cloudbasierte Auftragsplaner bietet vor allen Dingen Kollaborationsmöglichkeiten, da mehrere Benutzer gleichzeitig auf ihn zugreifen und zusammenarbeiten können. Insbesondere bei komplexen Fertigungsaufträgen können diese über den cloudbasierten Auftragsplaner im Team erzeugt werden.

Außerdem lässt sich der cloudbasierte Auftragsplaner problemlos mit anderer Cloud-Software kombinieren. Des Weiteren kann der cloudbasierte Auftragsplaner von einer verteilten Rechenzentrumsarchitektur, insbesondere in puncto Sicherheit, Zuverlässigkeit und/oder Performance, profitieren.

Es wäre insbesondere möglich, die Anwendung des Auftragsplaners in der Cloud als ein lizenzierbares Softwaretool für das Produktionssystem zur Verfügung zu stellen. Gemäß einer Variante liegt der cloudbasierte Auftragsplaner als Software-as-a-Service (SaaS) für die Lebensmittelverarbeitungsmaschine vor. Insbesondere könnte eine Bezahlung zur Verwendung des cloudbasierten Auftragsplaners für das jeweilige Produktionssystem in Abhängigkeit einer durch ihn angelegten und vollendeten Menge an Fertigungsaufträgen flexibel sein.

Gemäß einer Ausführungsform der Erfindung ist vorgesehen, dass der Auftragsplaner zum Generieren mindestens eines auf Basis des angelegten, primären Fertigungsauftrags auftragsbezogenen, sekundären Fertigungsauftrags konfiguriert ist. Damit ist es möglich, die Auftragsplanung noch weiter in die Cloud zu verlagern. Auftragsbezogene, sekundäre Fertigungsaufträge betreffen beispielsweise die interne Bereitstellung von benötigten Verpackungsmaterialien für den primären Fertigungsauftrag und/oder das Generieren von Zulieferaufträgen, beispielsweise die externe Bereitstellung eines zu verpackenden Lebensmittels.

Eine Variante sieht vor, dass sich der an die Lebensmittelverarbeitungsmaschine übermittelte, primäre Fertigungsauftrag anhand einer Steuereinrichtung der Lebensmittelverarbeitungsmaschine aufrufen lässt. Die auftragsbezogenen Fertigungsdaten lassen sich damit gesamtheitlich schnell an der Lebensmittelverarbeitungsmaschine aufrufen, ohne diese an der Maschine manuell eingeben zu müssen. Beispielsweise lässt sich ein in die Steuereinrichtung der Lebensmittelverarbeitungsmaschine übermittelter Fertigungsauftrag über ein Display der Steuereinrichtung aufrufen.

Vorzugsweise ist an der Steuereinrichtung der Lebensmittelverarbeitungsmaschine für einen Bediener ein zum Generieren von auftragsbezogenen Prozessparametern konfigurierter Prozessparametergenerator vorgesehen. Dieser ist insbesondere dazu ausgebildet, auf Basis der übermittelten, auftragsbezogenen Fertigungsdaten automatisiert dem Bediener Prozessparameter für den Betrieb der Lebensmittelverarbeitungsmaschine vorzuschlagen, anhand derer sich die Steuereinrichtung der Lebensmittelverarbeitungsmaschine zur Erfüllung des Fertigungsauftrags parametrisieren lässt. Denkbar wäre es, dass zumindest manche mittels des Prozessparametergenerators erzeugten Prozessparameter automatisch in der Steuereinrichtung der Lebensmittelverarbeitungsmaschine parametrisiert werden, auf Basis welcher daran ablaufenden Prozesse zur Herstellung des Produkts durchgeführt werden.

Vorteilhaft ist es, wenn das Produktionssystem mindestens eine mobile App zum Anzeigen eines für den angelegten, primären Fertigungsauftrag benötigten und/oder vorrätigen Lagerbestands aufweist. Diese App dient somit als mobiles Kommunikationstool für abseits von der Lebensmittelverarbeitungsmaschine arbeitende, vom Fertigungsauftrag der Lebensmittelverarbeitungsmaschine jedoch betroffene Personen. Eine solche mobile App kann insbesondere vom Lagermitarbeiter dafür genutzt werden, um die Ausführbarkeit des an die Lebensmittelverarbeitungsmaschine übermittelten Fertigungsauftrags anhand des aktuellen Lagerbestands zu prüfen und/oder zu bestätigen.

Vorstellbar wäre es, dass sich mittels der mobilen App auftragsbezogene Lagerfehlbestände aufzeigen lassen, worauf basierend Materialbestellungen für das Lager direkt über die mobile App ausführbar sind und/oder worauf basierend über Rückmeldung an die cloudbasierte Software diese Fehlbestände anzeigbar sind dem personellen Auftragsplaner anzeigbar sind, damit dieser ggf. Zulieferaufträge anpassen kann.

Vorzugsweise weist das Produktionssystem einen cloudbasierten Produktionsplaner zum Herstellen einer Reihenfolge aus mehreren angelegten, primären Fertigungsaufträgen in Abhängigkeit einer für das Produktionssystem durchgeführten Betriebsdatenerfassung auf. Die Lebensmittelverarbeitungsmaschine umfasst zum Erfassen der Betriebsdaten mehrere Sensoren, deren Signale mittels loT-Gateways aufbereitet und an die cloudbasierte Software des Auftragsplaners und/oder des Produktionsplaner senden. Damit ist es möglich, das aktuelle Produktionsgeschehen bzw. die aktuellen Produktionsgegebenheiten, beispielsweise Lagerbestände und/oder eine aktuelle Maschinenauslastung, beim Anlegen einer Reihenfolge angelegter Fertigungsaufträge derart zu berücksichtigen, dass diese zur Vermeidung von Materialengpässen und/oder zur Reduzierung von Maschinenstillstandzeiten ablaufen.

Für eine Vernetzung der Lebensmittelverarbeitungsmaschine mit der cloudbasierten Software kommt als Industrieprotokoll beispielsweise OPC UA, MQTT und/oder ProfiNet infrage, wobei die Datenübertragung von der Cloud auf die Lebensmittelverarbeitungsmaschine und/oder von der Lebensmittelverarbeitungsmaschine in die Cloud verschlüsselt sein kann.

Denkbar wäre es, dass der cloudbasierte Produktionsplaner ein zum Auswerten der im Produktionssystem erfassten Betriebsdaten konfiguriertes KI-Tool aufweist. Damit lassen sich Muster im aktuellen Produktionsablauf erkennen und/oder eine Wartungsprognose für eingesetzte Werkzeuge erstellen, worauf basierend eine Anpassung der geplanten Reihenfolge der Fertigungsaufträge generierbar ist. Damit lässt sich eine auf Basis des aktuellen, insbesondere auf Basis eines prognostizierbaren, Produktionsgeschehens eine priorisierte, ggf. angepasste Reihenfolge von angelegten Fertigungsaufträgen erzeugen, um eine perfekte Auslastung der Lebensmittelverarbeitungsmaschine im Produktionssystem zu erreichen.

Eine Variante sieht vor, das bei der cloudbasierten Auftragsplanung und/oder bei der cloudbasierten Produktionsplanung außer den im Produktionssystem lagerseits vorrätigen Materialien und/oder Produkten darüber hinaus bereits innerhalb des Produktionssystem für andere Fertigungsaufträge in Umlauf gebrachten, allerdings mit prognostizierbarem Restbestand verwendete Materialien und/oder Produkten berücksichtigt werden. Dies sorgt für einen nachhaltigen Herstellungsprozess mit reduzierten Lagerbeständen.

Gemäß einer Ausführungsform der Erfindung ist vorgesehen, dass das Produktionssystem mindestens eine die Lebensmittelverarbeitungsmaschine aufweisende Produktionslinie zum Ausführen des primären Fertigungsauftrags umfasst. In Produktionslinien, die aus mehreren Maschinen zusammengebaut sind, wirken sich Fehler bei der Auftragsplanung, beispielsweise Fehleingaben beim Übertragen von Auftragsdaten in die Steuereinrichtung der jeweiligen Maschine, überproportional auf die Herstellungskosten aus. Im Umkehrschluss bedeutet dies, dass der erfindungsgemäße, cloudbasierte Auftragsplaner als zentrale, online nutzbare Applikation ein hohes Potenzial zur Vermeidung von Fehleingaben für Produktionslinien bietet.

Vorzugsweise weist die Produktionslinie eine an den primären Fertigungsauftrag adaptive Liniensteuerung auf. Diese Liniensteuerung bildet eine für sämtliche Linienteilnehmer nutzbare Steuereinrichtung, deren Funktionsumfang auftragsspezifisch anpassbar ist, sprich sich mittels der Steuereinrichtung nur die für den jeweiligen Fertigungsauftrag benötigten Funktionen ansteuern und/oder anzeigen lassen. Denkbar wäre es, dass die adaptive Liniensteuerung ein hinsichtlich des herzustellenden Produkts funktionelle Anpassungsfähigkeit besitzt, indem sie beispielsweise lediglich produktbezogene Funktionen zur Auswahl zur Verfügung stellt.

Eine Variante sieht vor, dass anhand des Auftragsplaners simultan zur Ausführung des primären Fertigungsauftrags auftragsbezogen erfasste Performancedaten visualisierbar sind und/oder auf Basis von auftragsbezogen erfassten Performancedaten eine Fertigstellung des Fertigungsauftrags prognostizierbar ist. Damit lässt sich die Fertigung mittels der Cloud-Applikation überwachen. Weiter ist es möglich, anschließende Fertigungsaufträge auf Basis des prognostizierten Endes eines vorausgehenden Fertigungsauftrags bereits rechtzeitig vorzubereiten, beispielsweise Werkzeuge zur richtigen Zeit zur Verfügung zu stellen, damit sich die Lebensmittelverarbeitungsmaschine ohne unnötige Verzögerung im Fertigungsablauf umbauen lässt.

Insbesondere ist der Auftragsplaner zum Generieren eines auftragsbezogenen Chargenberichts konfiguriert. Darin ist der Fertigungsauftrag, insbesondere deren Ablauf zeitspezifisch protokolliert, sodass er ein nützliches Übergabeprotokoll für die hergestellte Charge bildet. Die Protokollierbarkeit des Fertigungsauftrags hilft vor allen Dingen, dass anschließende Prozesse, beispielsweise logistische Verfahren, optimal ausführbar sind. Der Chargenbericht kann in einem cloudbasierten Speicher abgelegt werden und ist je nach Bedarf einsehbar.

Eine Ausführungsform sieht vor, dass das Produktionssystem ein den Auftragsplaner umfassendes Webportal aufweist. Maschinenbetreiber können hier einen Account anlegen, über den der Auftragsplaner aufrufbar ist, damit sie darin für ihre Maschinen Fertigungsaufträge anlegen können. Eine vom Maschinenbetreiber gewünschte Aktualisierung des Auftragsplaners kann vom Maschinenhersteller durchgeführt werden.

Gemäß einer bevorzugten Ausführungsform der Erfindung ist vorgesehen, dass das Produktionssystem einen cloudbasierten Kundenauftragsplaner zum Anlegen eines dem primären Fertigungsauftrag zugrundeliegenden Kundenauftrags aufweist oder mit einem Kundenauftragsplaner zum Empfangen eines damit angelegten Kundenauftrags verbindbar ist, auf Basis dessen im Auftragsplaner der primäre Fertigungsauftrag anlegbar ist. Damit ist es möglich, dass ein vom Auftraggeber in einer bestimmten Menge bestelltes Produkt als Trigger automatisch einen dementsprechenden Fertigungsauftrag im Auftragsplaner generiert, und dieser automatisch oder durch fachmännische Freigabe an den Produktionsbereich übermittelt wird.

Vorzugsweise ist der Auftragsplaner auf einer Displayeinrichtung der Lebensmittelverarbeitungsmaschine aufrufbar. Damit kann vor Ort an der Maschine ein Fertigungsauftrag über die Steuereinrichtung mittels des damit funktional verbundenen, cloudbasierten Auftragsplaners generiert werden. Dadurch wird die Möglichkeit geboten, direkt an der Lebensmittelverarbeitungsmaschine Fertigungsaufträge anzulegen.

Ferner betrifft die Erfindung ein Verfahren zum Steuern eines Produktionssystems, wobei mittels eines cloudbasierten Auftragsplaners des Produktionssystems ein primärer Fertigungsauftrag für ein bestimmtes Produkt in einer bestimmten Menge angelegt und einer Lebensmittelverarbeitungsmaschine des Produktionssystems zur Herstellung des Produkts übermittelt wird. Mit dem erfindungsgemäßen, cloudbasierten Auftragsplaner können insbesondere mehrere Lebensmittelverarbeitungsmaschinen mit Fertigungsaufträgen von einer zentralen Stelle aus versorgt werden. Dies kann von jedem Ort aus geschehen, von dem aus sich der erfindungsgemäße Auftragsplaner online über die Cloud aufrufen lässt.

Ausführungsbeispiele der Erfindung werden anhand der folgenden Figuren genauer erläutert. Es zeigen:
Figur 1 ein Produktionssystem mit einem cloudbasierten Auftragsplaner für eine Lebensmittelverarbeitungsmaschine, die als Tiefziehverpackungsmaschine konfiguriert ist,
Figur 2 eine als Schalenverschließmaschine konfigurierte Lebensmittelverarbeitungsmaschine, welche mittels des cloudbasierten Auftragsplaners aus Figur 1 ansteuerbar ist,
Figur 3 eine als Teigverarbeitungsmaschine konfigurierte Lebensmittelverarbeitungsmaschine, welche mittels des cloudbasierten Auftragsplaners aus Figur 1 ansteuerbar ist,
Figur 4 eine als Schneidmaschine konfigurierte Lebensmittelverarbeitungsmaschine, die mittels des cloudbasierten Auftragsplaners aus Figur 1 ansteuerbar ist, und
Figur 5 eine Produktionslinie, die mittels des cloudbasierten Auftragsplaners aus Figur 1 ansteuerbar ist.

Gleiche technische Merkmale sind in den Figuren durchgehend mit denselben Bezugszeichen versehen.

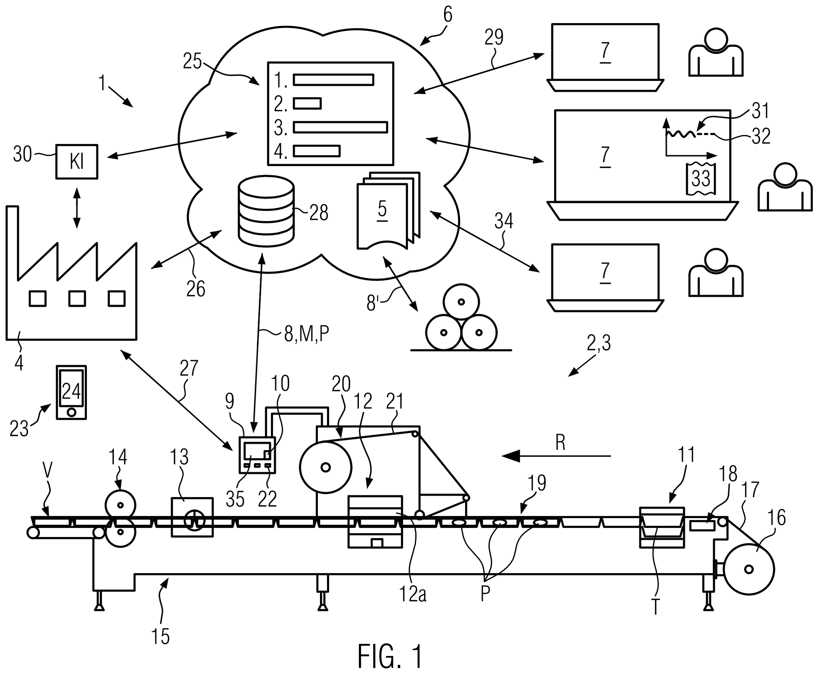

Figur 1 zeigt ein Produktionssystem 1. Das Produktionssystem 1 umfasst eine Lebensmittelverarbeitungsmaschine 2, die in Figur 1 in Form einer intermittierend arbeitenden Tiefziehverpackungsmaschine 3 konfiguriert ist. Die Tiefziehverpackungsmaschine 3 gehört zu einem Produktionswerk 4, in welchem weitere Lebensmittelverarbeitungsmaschinen 2 zum Einsatz kommen. Für das Produktionswerk 4, insbesondere die darin arbeitende Tiefziehverpackungsmaschine 3, besitzt das Produktionssystem 1 einen Auftragsplaner 5, der als cloudbasierte Software 6 vorliegt.

Der Auftragsplaner 5 kann von einem Benutzer über ein Webportal 7 abseits des Produktionswerks 4 aufgerufen werden, um damit einen primären Fertigungsauftrag 8 für die Tiefziehverpackungsmaschine 3 anzulegen. Der in der cloudbasierten Software 6 hergestellte, primäre Fertigungsauftrag 8 kann über die Cloud-Anwendung, d.h. mittels des cloudbasierten Auftragsplaners 5, an eine Steuereinrichtung 9 der Tiefziehverpackungsmaschine 3 übermittelt werden.

Hinsichtlich einer im Fertigungsauftrag 8 festgelegten, vorbestimmten Menge M von mit einem bestimmten Produkt P beladenen Verpackungen V sind im primären Fertigungsauftrag 8 insbesondere Daten betreffend das zu verwendende Verpackungsmaterial hinterlegt, welches die Tiefziehverpackungsmaschine 3 zum Herstellen des Fertigungsauftrags 8 benötigt.

Die Tiefziehverpackungsmaschine 3 aus Figur 1 verfügt über einen Prozessparametergenerator 10 in der Steuereinrichtung 9. Der Prozessparametergenerator 10 ist dazu ausgebildet, auftragsbezogene Prozessparameter für Arbeitsstationen der Tiefziehverpackungsmaschine 3 zu generieren. Als Arbeitsstationen sind an der Tiefziehverpackungsmaschine 3 eine Formstation 11, eine Siegelstation 12, eine Querschneideeinrichtung 13 und eine Längsschneideeinrichtung 14 vorgesehen, die in dieser Reihenfolge in einer Produktionsrichtung R an einem Maschinengestell 15 angeordnet sind. Eingangsseitig befindet sich an dem Maschinengestell 15 eine Zufuhrrolle 16, von der eine Unterfolie 17 abgezogen wird. Ferner weist die Tiefziehverpackungsmaschine 3 eine Transportkette 18 auf, die die Unterfolie 17 ergreift und diese pro Hauptarbeitstakt in Produktionsrichtung R weitertransportiert.

Die Formstation 11 ist als eine Tiefziehstation ausgebildet, in der durch Tiefziehen, beispielsweise mittels Druckluft und/oder Vakuum, die Mulden T geformt werden. Dabei kann die Formstation 11 in der Art ausgebildet sein, dass in der Richtung senkrecht zur Produktionsrichtung R mehrere Mulden T nebeneinander gebildet werden. In Produktionsrichtung R hinter der Formstation 11 ist eine Einfüllstrecke bzw. ein Einlegebereich 19 vorgesehen, entlang welcher die Verpackungsmulden T mit Produkten P befüllt werden. Das Befüllen der Verpackungsmulden T kann von einem Bediener manuell oder durch eine Befülleinrichtung oder durch einen Picker maschinell durchgeführt werden.

Die Siegelstation 12 verfügt über eine hermetisch verschließbare Kammer 12a, in der die Atmosphäre in den Verpackungsmulden T vor dem Versiegeln mit einer von einer Folienaufnahme 20 abgegebenen Oberfolie 21 z.B. evakuiert und/oder durch Gasspülen mit einem Austauschgas oder mit einem Gasgemisch ersetzt werden kann.

Die Querschneideeinrichtung 13 kann als Stanze ausgebildet sein, die die Unterfolie 17 und die Oberfolie 21 in einer Richtung quer zur Produktionsrichtung R zwischen benachbarten Verpackungsmulden T durchtrennt. Dabei arbeitet die Querschneideeinrichtung 13 derart, dass die Unterfolie 17 nicht über die gesamte Breite aufgetrennt wird, sondern zumindest in einem Randbereich nicht durchtrennt wird. Dies ermöglicht einen kontrollierten Weitertransport durch die Transportkette 18.

Die Längsschneideeinrichtung 14 kann als eine Messeranordnung ausgebildet sein, mit der die Unterfolie 17 und die Oberfolie 21 zwischen benachbarten Verpackungsmulden T und am seitlichen Rand der Unterfolie 17 in Produktionsrichtung R durchtrennt werden, sodass hinter der Längsschneideeinrichtung 14 einzelne Verpackungen V vorliegen.

Die Steuereinrichtung 9 der Tiefziehverpackungsmaschine 3 hat die Aufgabe, die in der Tiefziehverpackungsmaschine 3 ablaufenden Prozesse zu steuern und zu überwachen. Die Steuereinrichtung 9 weist eine Benutzeroberfläche 22 auf, die zum Einstellen von Prozessabläufen, insbesondere zum Auswählen von Prozessabläufen bei Inbetriebnahme der Tiefziehverpackungsmaschine 3, zum Visualisieren und/oder Beeinflussen der Prozessabläufe in der Tiefziehverpackungsmaschine 3 beziehungsweise durch einen Bediener dient. Insbesondere ist die Steuereinrichtung 9 dazu konfiguriert, über das Internet eine Verbindung zum cloudbasierten Auftragsplaner 5 herzustellen.

Ferner zeigt Figur 1, dass das Produktionssystem 1 eine mobile App 23 aufweist, die dazu ausgebildet ist, einen für den angelegten, primären Fertigungsauftrag 8 benötigten und/oder vorrätigen Lagerbestand 24 anzuzeigen.

Ferner weist das Produktionssystem 1 einen cloudbasierten Produktionsplaner 25 auf, der dazu ausgebildet ist, eine Reihenfolge aus mehreren angelegten, primären Fertigungsaufträgen 8 in Abhängigkeit einer für das Produktionssystem 1 durchgeführten Betriebsdatenerfassung 26 herzustellen. In der Betriebsdatenerfassung 26 sind unter anderem während des Herstellungsprozesses der Tiefziehverpackungsmaschine 3 erfasste Produktionsdaten 27 berücksichtigt. Die Betriebsdatenerfassung 26 kann in einem cloudbasierten Speicher 28 gespeichert oder direkt vom Produktionsplaner 25 ausgewertet werden.

Ferner zeigt Figur 1, dass das Produktionssystem 1 eine Schnittstelle 29 aufweist, über welche ein Maschinenhersteller über das Webportal 7 den cloudbasierten Auftragsplaner 5 aktualisieren kann. Das Webportal 7 bietet damit sowohl dem Maschinenbetreiber als auch dem Maschinenhersteller Zugriff auf den cloudbasierten Auftragsplaner 5.

Ferner verfügt das Produktionssystem 1 über ein Kl-Tool 30 das dazu ausgebildet ist, die Betriebsdatenerfassung 26 auszuwerten, insbesondere die erfassten Produktionsdaten 27 der Tiefziehverpackungsmaschine 3, worauf basierend sich die Reihenfolge der Fertigungsaufträge 8 im Produktionsplaner 25 herstellen lässt.

Ferner ist der cloudbasierte Auftragsplaner 5 zum Generieren mindestens eines auf Basis des angelegten, primären Fertigungsauftrags 8 auftragsbezogenen, sekundären Fertigungsauftrags 8' konfiguriert. Der sekundäre Fertigungsauftrag 8' kann beispielsweise die Fertigung und/oder Bereitstellung von Verpackungsmaterial betreffen, welches zur Ausführung des Fertigungsauftrags 8 benötigt wird.

Weiterhin ist für das Produktionssystem 1 aus Figur 1 vorgesehen, dass anhand des cloudbasierten Auftragsplaners 5 auftragsbezogen, erfasste Performancedaten 31 über das Webportal 7 visualisierbar sind. Das Visualisieren der Performancedaten 31 kann simultan zur Ausführung des primären Fertigungsauftrags 8 geschehen. Weiterhin kann der Auftragsplaner 5 dazu konfiguriert sein, eine Fertigstellung 32 des Fertigungsauftrags 8 auf Basis erfasster Performancedaten 31 zu prognostizieren, beispielsweise durch Extrapolation. Weiter kann der cloudbasierte Auftragsplaner 5 dafür eingesetzt werden, einen auftragsbezogenen Chargenbericht 33 herzustellen. Die Performancedaten 31 einschließlich die prognostizierbare Fertigstellung 32 sowie der Chargenbericht 33 lassen sich über das Webportal 7 abrufen.

Über das Webportal 7 kann ein Kundenauftragsplaner 34 zum Anlegen eines dem primären Fertigungsauftrags 8 zugrundeliegenden Kundenauftrags vorliegen. Auf Basis des Kundenauftragsplaners 34, der entweder als cloudbasierte Applikation oder als separate Anwendung vorliegt, kann die bestimmte Menge M für das bestimmte Produkt P dem cloudbasierten Auftragsplaner 5 übermittelt werden, auf Basis welcher Daten dieser den primären Fertigungsauftrag 8 generiert.

Außerdem zeigt Figur 1, dass die Steuereinrichtung 9 der Tiefziehverpackungsmaschine 3 eine Displayeinrichtung 35 aufweist, über welche das Webportal 7 aufrufbar ist, um direkt an der Tiefziehverpackungsmaschine 3 den cloudbasierten Auftragsplaner 5 anzuwenden.

Zur vereinfachten Darstellung von mit dem cloudbasierten Auftragsplaner 5 vernetzbaren Maschinen sind diese in den folgenden Figuren gesondert, d.h. ohne das cloudbasierte Netzwerk gezeigt.

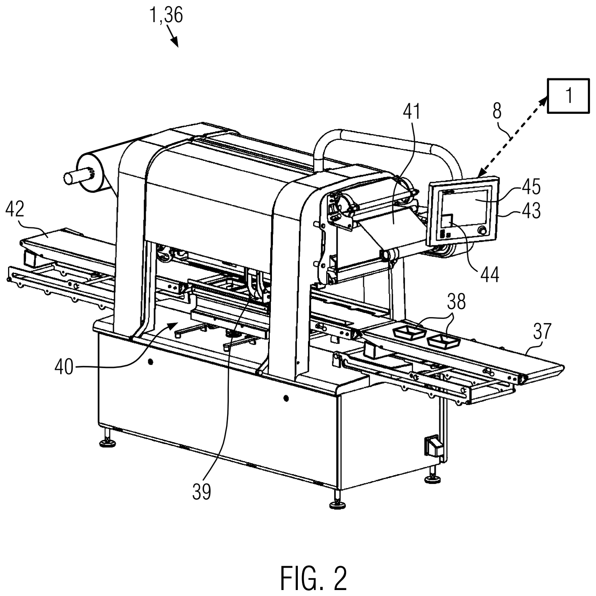

Figur 2 zeigt eine weitere Lebensmittelverarbeitungsmaschine 1, die als Schalenverschließmaschine 36 vorliegt. Die Schalenverschließmaschine 36 kann anstelle der in Figur 1 gezeigten Tiefziehverpackungsmaschine 3 oder ergänzend zu dieser im cloudbasierten Produktionssystem 1 eingesetzt werden. Die Schalenverschließmaschine 36 wird in Fachkreisen auch Traysealer genannt.

Die Schalenverschließmaschine 36 weist ein Zuführband 37 auf, auf welchem vorgefertigte, produktbeladene Schalenteile 38 transportiert werden. Ferner verfügt die Schalenverschließmaschine 36 über eine Greifereinrichtung 39. Mittels der Greifereinrichtung 39 können die auf dem Zuführband 37 bereitgestellten Schalenteile 38 abgeholt und für einen Siegelprozess in eine Siegelstation 40 der Schalenverschließmaschine 36 transportiert werden. In der Siegelstation 40 aufgenommene Schalenteile 38 werden mit einer durch die Siegelstation 40 hindurch geführten Oberfolie 41 versiegelt und vereinzelt. Die versiegelten Schalenteile 38 werden nach dem Siegelprozess mittels der Greifereinrichtung 39 aufgenommen und an ein Abführband 42 übergeben.

Die Schalenverschließmaschine 36 verfügt über eine Steuereinrichtung 43 mit einem Prozessparametergenerator 44 sowie einer Displayeinrichtung 45. Die Steuereinrichtung 43 ist dazu konfiguriert, die in der Schalenverschließmaschine 36 ablaufenden Prozesse zu steuern und zu überwachen. Mittels der Displayeinrichtung 45 kann der cloudbasierte Auftragsplaner 5 aufgerufen werden, um einen Fertigungsauftrag 8 anzulegen. Die Steuereinrichtung 43 ist derart in das Produktionssystem 1 funktional integriert, dass sich der Fertigungsauftrag 8 abseits der Schalenverschließmaschine 36 über das Webportal 7 mittels des cloudbasierten Auftragsplaners 5 anlegen und an die Schalenverschließmaschine 36 übermitteln lässt.

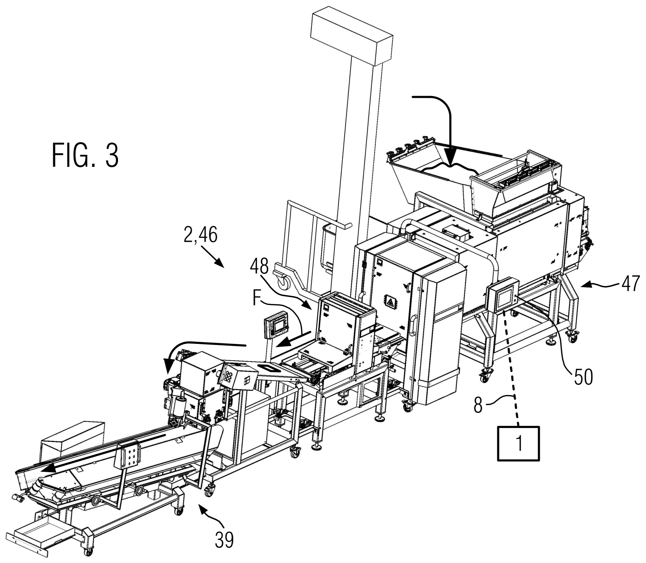

Figur 3 zeigt eine Lebensmittelverarbeitungsmaschine 2 als Teigverarbeitungsmaschine 46. Die Teigverarbeitungsmaschine 46 kann beispielsweise zum Herstellen von Brot konfiguriert sein. Sie weist einen Teigbanderzeuger 47 zum Herstellen eines Teigbands sowie eine Teigbandschneidvorrichtung 48 auf, die dazu konfiguriert ist, eine Teigmasse, vorzugsweise quer zum Produktionspfad F von dem Teigband abzutrennen. Ferner verfügt die Teigverarbeitungsmaschine 46 über eine Teigverarbeitungsvorrichtung 49, die dazu konfiguriert ist, aus der Teigmasse geformte Teigwaren herzustellen. Die Teigverarbeitungsmaschine 46 weist eine Steuereinrichtung 50 auf, die sich mit dem Produktionssystem 1 verbinden lässt, um vom cloudbasierten Auftragsplaner 5 Fertigungsaufträge 8 in Empfang zu nehmen.

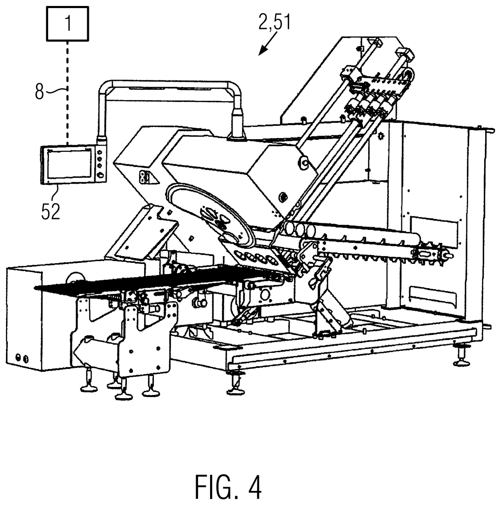

Figur 4 zeigt eine Lebensmittelverarbeitungsmaschine 2 in Form einer Schneidmaschine 51, die zum Aufschneiden eines Lebensmittelprodukts in Scheiben dient. Die Schneidmaschine 51 weist eine Steuereinrichtung 52 auf, die sich funktional mit dem Produktionssystem 1 verbinden lässt, um Fertigungsaufträge 8 zu empfangen zu können.

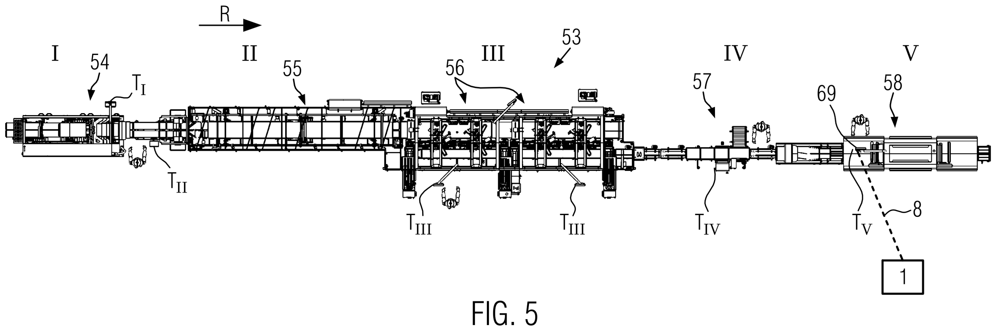

Figur 5 zeigt eine Produktionslinie 53, die in Form einer Verpackungslinie vorliegt. Die Produktionslinie 53 verfügt über mehrere in Produktionsrichtung R hintereinander positionierte Linienmodule I bis V. Das Linienmodul I ist eine Schneidmaschine 54. Die Schneidmaschine 54 kann in Form der in Figur 4 gezeigten Schneidmaschine 51 vorliegen.

Das stromabwärts positionierte Linienmodul II ist als Zuführeinrichtung 55 konfiguriert, die geschnittenen Produkte in Spuren zu bringen und zueinander in vorbestimmten Abständen zu positionieren, um diese zu gruppieren. Weiter stromabwärts liegt als Linienmodul III eine Pickereinrichtung 56 vor, die dazu ausgebildet ist, die ihr zugeführten, geschnittenen Produkte in bereitgestellte Schalenteile einzulegen, um sollgewichtige Verpackungen zu bilden. Die mit Produkt beladenen Schalenteile werden von der Pickereinrichtung 56 an das weiter stromabwärts positionierte Linienmodul IV transportiert, welches als Wägeeinrichtung 57 vorliegt, um sollgewichtige Gutverpackungen zu identifizieren, die der weiter stromabwärts als Linienmodul V konfigurierten Verpackungsmaschine 58 zuführbar sind. Die Verpackungsmaschine 58 liegt als Schalenverschließmaschine vor.

Die Linienmodule I bis V aus Figur 5 verfügen über Bedienterminals T_{I - V}. Produktionsmitarbeiter können an den jeweiligen Bedienterminals T_{I - V} den Betrieb des jeweiligen Linienmoduls I bis V steuern und/oder überwachen.

Gemäß Figur 5 ist das Bedienterminal T_{V} funktional an das Produktionssystem 1 angebunden, um Fertigungsaufträge 8 vom cloudbasierten Auftragsplaner 5 zu erhalten. Das Bedienterminal T_{V} ist insbesondere als eine an den primären Fertigungsauftrag 8 anpassbare Liniensteuerung 69 ausgebildet, anhand welcher sich außer der Verpackungsmaschine 58 auch die stromaufwärts positionierten Linienmodule I bis IV ansteuern lassen.

## Patentansprüche

1. Produktionssystem (1), umfassend mindestens eine Lebensmittelverarbeitungsmaschine (2) sowie einen Auftragsplaner (5) für die Lebensmittelverarbeitungsmaschine (2), **dadurch gekennzeichnet, dass** der Auftragsplaner (5) als eine cloudbasierte Anwendungssoftware (6) vorliegt, die zum Anlegen eines primären Fertigungsauftrags (8) für ein bestimmtes Produkt (P) in einer bestimmten Menge (M) sowie zum Übermitteln des angelegten, primären Fertigungsauftrags (8) an die Lebensmittelverarbeitungsmaschine (2) konfiguriert ist.

2. Produktionssystem nach Anspruch 1, **dadurch gekennzeichnet, dass** der Auftragsplaner (5) zum Generieren mindestens eines auf Basis des angelegten, primären Fertigungsauftrags (8) auftragsbezogenen, sekundären (8') Fertigungsauftrags konfiguriert ist.

3. Produktionssystem nach einem der vorangehenden Ansprüche, **dadurch gekennzeichnet, dass** sich der an die Lebensmittelverarbeitungsmaschine (2) übermittelte, primäre Fertigungsauftrag (8) anhand einer Steuereinrichtung (9) der Lebensmittelverarbeitungsmaschine (2) aufrufen lässt.

4. Produktionssystem nach Anspruch 3, **dadurch gekennzeichnet, dass** an der Steuereinrichtung (9) der Lebensmittelverarbeitungsmaschine (2) für einen Bediener ein zum Generieren von auftragsbezogenen Prozessparametern konfigurierter Prozessparametergenerator (10) vorgesehen ist.

5. Produktionssystem nach einem der vorangehenden Ansprüche, **dadurch gekennzeichnet, dass** das Produktionssystem (1) mindestens eine mobile App (23) zum Anzeigen eines für den angelegten, primären Fertigungsauftrag (8) benötigten und/oder vorrätigen Lagerbestands (24) aufweist.

6. Produktionssystem nach einem der vorangehenden Ansprüche, **dadurch gekennzeichnet, dass** das Produktionssystem (1) einen cloudbasierten Produktionsplaner (25) zum Herstellen einer Reihenfolge aus mehreren angelegten, primären Fertigungsaufträgen (8) in Abhängigkeit einer für das Produktionssystem (1) durchgeführten Betriebsdatenerfassung (26) aufweist.

7. Produktionssystem nach Anspruch 6, **dadurch gekennzeichnet, dass** der Produktionsplaner (25) ein zum Auswerten der im Produktionssystem (1) erfassten Betriebsdaten (26) konfiguriertes KI-Tool (30) aufweist.

8. Produktionssystem nach einem der vorangehenden Ansprüche, **dadurch gekennzeichnet, dass** das Produktionssystem (8) mindestens eine die Lebensmittelverarbeitungsmaschine (2) aufweisende Produktionslinie (53) zum Ausführen des primären Fertigungsauftrags (8) umfasst.

9. Produktionssystem nach Anspruch 8, **dadurch gekennzeichnet, dass** die Produktionslinie (53) eine an den primären Fertigungsauftrag (8) adaptive Liniensteuerung (69) aufweist.

10. Produktionssystem nach einem der vorangehenden Ansprüche, **dadurch gekennzeichnet, dass** anhand des Auftragsplaners (5) simultan zur Ausführung des primären Fertigungsauftrags (8) auftragsbezogen erfasste Performancedaten (31) visualisierbar sind und/oder auf Basis von auftragsbezogen erfassten Performancedaten (31) eine Fertigstellung (32) des Fertigungsauftrags (8) prognostizierbar ist.

11. Produktionssystem nach einem der vorangehenden Ansprüche, **dadurch gekennzeichnet, dass** der Auftragsplaner (5) zum Generieren eines auftragsbezogenen Chargenberichts (33) konfiguriert ist.

12. Produktionssystem nach einem der vorangehenden Ansprüche, **dadurch gekennzeichnet, dass** das Produktionssystem (1) ein den Auftragsplaner (5) umfassendes Webportal (7) aufweist.

13. Produktionssystem nach einem der vorangehenden Ansprüche, **dadurch gekennzeichnet, dass** das Produktionssystem (1) einen cloudbasierten Kundenauftragsplaner (34) zum Anlegen eines dem primären Fertigungsauftrag (8) zugrundeliegenden Kundenauftrags aufweist oder mit einem Kundenauftragsplaner (34) zum Empfangen eines damit angelegten Kundenauftrags verbindbar ist, auf Basis dessen im Auftragsplaner (5) der primäre Fertigungsauftrag (8) anlegbar ist.

14. Produktionssystem nach einem der vorangehenden Ansprüche, **dadurch gekennzeichnet, dass** der Auftragsplaner (5) auf einer Displayeinrichtung (35) der Lebensmittelverarbeitungsmaschine (2) aufrufbar ist.

15. Verfahren zum Steuern eines Produktionssystems (1), **dadurch gekennzeichnet, dass** mittels eines cloudbasierten Auftragsplaners (5) des Produktionssystems (1) ein primärer Fertigungsauftrag (8) für ein bestimmtes Produkt (P) in einer bestimmten Menge (M) angelegt und einer Lebensmittelverarbeitungsmaschine (2) des Produktionssystems (1) zur Herstellung des Produkts (P) übermittelt wird.
